# EUROPÄISCHE PATENTSCHRIFT

(11) **EP 3 335 087 B1**
(45) Veröffentlichungstag und Bekanntmachung des Hinweises auf die Patenterteilung: **27.05.2020**
(21) Anmeldenummer: 16759717.8
(22) Anmeldetag: 24.08.2016
(51) Int. Cl.: G05B 19/4103

(54) **VERFAHREN ZUR BEREITSTELLUNG EINES VERFAHRPROFILS, STEUEREINRICHTUNG, MASCHINE SOWIE COMPUTERPROGRAMM**
METHOD FOR PROVIDING A ROUTE PROFILE, CONTROL DEVICE, MACHINE AND COMPUTER PROGRAM
PROCEDE DE MISE A DISPOSITION D'UN PROFIL DE DEPLACEMENT, DISPOSITIF DE COMMANDE, MACHINE ET PROGRAMME D'ORDINATEUR

(30) Priorität: 15.09.2015 EP 15185161
(43) Veröffentlichungstag der Anmeldung: 20.06.2018
(73) Patentinhaber: Siemens Aktiengesellschaft, 80333 München (DE)
(72) Erfinder: PITZ, Thomas, 71277 Rutesheim (DE); SPIELMANN, Ralf, 70569 Stuttgart (DE)
(86) Internationale Anmeldenummer: PCT/EP2016/069954
(87) Internationale Veröffentlichungsnummer: WO 2017/045884

(56) Entgegenhaltungen:
- NARAYANASWAMI R ET AL: "Multiresolution analysis as an approach for tool path planning in NC machining", COMPUTER AIDED DESIGN, ELSEVIER PUBLISHERS BV., BARKING, GB, Bd. 35, Nr. 2, 1. Februar 2003 (2003-02-01), Seiten 167-178, XP004383515, ISSN: 0010-4485, DOI: 10.1016/S0010-4485(02)00050-7
- WEINERT K ET AL: "Optimizing of NC Tool Paths for Five-Axis Milling usingEvolutionary Algorithms on Wavelets", GECCO'06, JULY 8-12, 200 6 , SEATTLE, WASHINGTON, USA., 12. Juli 2006 (2006-07-12), Seiten 1809-806, XP040043374, DOI: 10.1145/1143997.1144289 ISBN: 1-59593-186-4

## Beschreibung

Die Erfindung betrifft ein Verfahren zur Bereitstellung eines Verfahrprofils, eine Steuereinrichtung, eine Maschine, insbesondere eine Werkzeugmaschine, sowie ein Computerprogramm.

Üblicherweise wird zur Steuerung einer Werkzeugmaschine ein Verfahrprofil für ein Werkzeug erzeugt. Das Verfahrprofil gibt die Bahn an, entlang der das Werkzeug mit einer vorgegebenen Geschwindigkeit entlang bewegt wird. Ausgang zur Berechnung einer solchen Bahn ist beispielsweise eine technische Zeichnung (CAD-Datei). Aus der technischen Zeichnung wird hierfür ein so genanntes G-Code-Programm, auch CNC-Programm oder Teile-Programm genannt, erzeugt. Das G-Code-Programm gibt das Verfahrprofil des Werkzeugs vor. Die Erzeugung des G-Code-Programms ist meist in einem CAD/CAM/PP-System automatisiert. Hierbei bezeichnet CAD Computer Aided Design und CAM steht für Computer Aided Manufacturing. Weiter steht PP für Post Processing. Mit Hilfe des CAD/CAM/PP Verfahren wird das G-Code-Programm erstellt, das ein Verfahrprofil für ein Werkzeug zur Bearbeitung des Werkstücks enthält.

Mit Hilfe einer Werkzeugmaschine, insbesondere einer CNC-Maschine, kann ein Werkstück mit Hilfe von unterschiedlichen Bearbeitungsarten hergestellt werden. Beispielsweise erfolgt zunächst ein grobes Abtragen des überschüssigen Materials mit Hilfe der Bearbeitungsart "Schruppverfahren". Weiter kann mit einer Werkzeugmaschine ein Metallstück durch eine Bearbeitungsart "Laserschneidverfahren" aus einem größeren Metallstück herausgetrennt werden. Unterschiedliche Bearbeitungsarten bedürfen unterschiedlichen Genauigkeiten, können in unterschiedlichen Geschwindigkeiten erfolgen und sind somit durch verschiedene Maßzahlen (wie Toleranzen, Materialkonstanten,...) beschreibbar.

Vorgeschlagen wurde zur Berechnung von allgemeinen Verfahrprofilen der Einsatz einer Fourier-Transformation.

Im Gegensatz zu einer Fourier-Transformation, die ein Zeitsignal in ein Frequenzsignal transformiert, so dass eine Frequenzanalyse erfolgen kann, wird durch die Wavelet-Transformation eine Zeit-Frequenz-Analyse, also eine Mischung aus Analyse im Zeitbereich und im Frequenzbereich, ermöglicht.

Der Artikel von NARAYANASWAMI et al. mit dem Titel "Multiresolution analysis as an approach for tool path planing in NC machining" aus COMPUTER AIDED DESIGN; Bd. 35, Nr. 2, 1. Feb. 2003 (Seiten 167 - 178) betrifft die Berechnung eines Verfahrprofils für eine NC-Maschine.

Aufgabe der Erfindung ist es, die Berechnung eines verbesserten Verfahrprofils zu ermöglichen.

Aufgabe der vorliegenden Erfindung ist es, ein Verfahrprofil erstellen zu können, wobei die Bearbeitungsart bei der Erstellung des Verfahrprofils berücksichtigt wird.

Diese Aufgabe wird durch ein Verfahren zur Bereitstellung eines Verfahrprofils, insbesondere das Verfahrprofil eines Werkzeugs in einer Werkzeugmaschine, gelöst, wobei eine Solllinie vorgegeben ist, wobei die Solllinie anhand von Punkten entlang einer Kante oder einer Ecke eines Werkstücks definiert ist, wobei zumindest die folgenden Schritte A), B), D) und E) oder zumindest die Schritte C), D) und E) ablaufen:
A) Erstellung von n Approximationskurven, wobei die n Approximationskurven anhand einer unterschiedlichen Anzahl und/oder Position von Punkten, insbesondere aus Punkten der Solllinie, durch eine Approximation erstellt werden,
B) Erstellung von n Transformationskurven, wobei die Transformationskurven jeweils durch eine Differenzbildung aus jeweils zwei der n Approximationskurven erzeugt werden,
C) Erstellung von n Transformationskurve durch Wavelet-Approximationen der Solllinie,
D) Erstellung von n Modifikationskurven, wobei die j-te (j=l...n) Modifikationskurven aus der j-ten Transformationskurve durch einen Modifikationsprozess erzeugt wird,
E) Erstellung des Verfahrprofils durch Addition der n Modifikationskurven.

Unter einem Verfahrprofil wird die Kurve verstanden, die ein Werkzeug bei der Bearbeitung eines Werkstücks durchläuft. Das Verfahrprofil ist hierbei möglichst kurz zu wählen, so dass das bei einer begrenzten Geschwindigkeit des Werkzeugs eine möglichst kurze Bearbeitungszeit eingehalten wird. Das Verfahrprofil hängt überdies von einer wählbaren Bearbeitungsart (Laserschneiden, Grob-Bearbeitung mit einem Schneidwerkzeug oder Feinbearbeitung mit einem Werkzeug) ab.

Eine Solllinie umfasst eine Menge von Punkten, welche die Kante abbilden, wobei die Punkte beispielsweise auf einer Geraden liegen, die orthogonal zu einer Kante auf der Oberfläche des herzustellenden Werkstücks verläuft.

Eine Ecke ist dabei als eine Kreuzung von zumindest zwei Kanten definiert.

Die Aufgabe wird weiter durch eine Steuereinrichtung, insbesondere Steuereinrichtung einer Werkzeugmaschine, gelöst, wobei die Steuereinrichtung zur Bereitstellung eines Verfahrprofils vorgesehen ist, wobei als Eingangsgröße eine Solllinie, Stützpunkte und/oder ein G-Code-Programm vorgesehen sind und wobei zur Bereitstellung des Verfahrprofils ein hier beschriebenes Verfahren vorgesehen ist.

Die Aufgabe wird weiter durch eine Maschine, insbesondere eine Werkzeugmaschine gemäß Anspruch 11 gelöst.

Die Aufgabe wird weiter durch ein Computerprogramm gemäß Anspruch 12 gelöst.

Unter einem Verfahrprofil wird eine vorgesehene Bewegung eines Werkzeugs in einer Werkzeugmaschine verstanden. Das Verfahrprofil gibt dabei den Pfad an, den das Werkzeug im Laufe der Bearbeitung eines Werkstücks durchläuft.

Unter einer Solllinie wird eine Kurve verstanden, die entlang einer Oberfläche eines Werkstücks verläuft. Die Solllinie ist vorteilhaft durch eine endliche Menge von Punkten darstellbar. Dabei sind die Punkte entlang der Solllinie angeordnet. Die Solllinie wird aus der CAD-Datei erzeugt. Die Solllinie definiert sich über Geraden und Ecken des dargestellten Werkstücks. Eine Solllinie umfasst eine Menge von Punkten, welche eine Kante des Werkstücks abbilden, wobei die Punkte beispielsweise entlang einer Geraden liegen, die orthogonal auf einer Kante auf der Oberfläche des herzustellenden Werkstücks liegt.

Die Approximationskurven werden durch eine Approximation aus den Punkten der Solllinie mit Hilfe einer Approximationsfunktion erstellt. Als Approximationsfunktionen eignen sich Polynome, insbesondere Spline-Funktionen, oder Produkte von Polynomen mit Trigonometrischen Funktionen. Solche Approximationsfunktionen können auch Wavelet-Basisfunktionen sein.

Die Approximationskurven dienen zur Approximation der Solllinie. Je nach Anzahl der Punkte, die für die Approximation der Solllinie eingesetzt werden, weist die Approximationskurve einen speziellen Verlauf auf. Regelmäßig verläuft die Approximationskurve mit steigender Anzahl von Punkten näher an der Solllinie.

Vorteilhaft werden die Punkte äquidistant angeordnet. Durch ein Auslassen von jeweils einem Punkt oder mehreren Punkten und ggf. einer Verschiebung der Punkte zu einem äquidistanten Abstand können je nach Anzahl von ausgelassenen Punkten und anschließender Approximation der Kurve anhand der noch vorhandenen Punkte Approximationskurven erstellt werden. Zur Bereitstellung von n Approximationskurven wird anhand einer Vielzahl von Punkten, welche auf der Solllinie liegen, eine erste Approximationskurve mit einer Approximationsfunktion erstellt. Dann werden einige Punkte aus der Solllinie entfernt. Die zweite Approximationskurve entsteht durch eine Approximation anhand der reduzierten Anzahl an Punkten mit der Approximationskurve.

Aus den Approximationskurven werden Transformationskurven wie folgt erstellt. Eine Transformationskurve wird durch Subtraktion von jeweils zwei Approximationskurven berechnet. Vorteilhaft wird zur Erstellung einer ersten Transformationskurve die erste Approximationskurve von der zweiten Approximationskurve subtrahiert. Zur Berechnung der j-ten Transformationskurve wird vorteilhaft die j-te Approximationskurve von der (j+1)-ten Approximationskurve subtrahiert. So werden aus n Approximationskurven n-1 Transformationskurven berechnet. Die n-te Transformationskurve entspricht dann der n-ten Approximationskurve.

Eine andere Möglichkeit, Transformationskurven zu berechnen, ist eine Wavelet-Approximation der Solllinie. Hierfür wird die Solllinie nach einer Wavelet-Basisfunktion entwickelt. Hierfür wird die erste Transformationskurve durch eine Entwicklung der Solllinie nach der ersten Wavelet-Basisfunktion berechnet. Die Berechnung der j-ten Transformationskurve erfolgt durch die Entwicklung der Solllinie nach der j-ten Wavelet-Basisfunktion. Die Entwicklung nach einer Wavelet-Basisfunktion kann hierbei als Skalarprodukt von der Solllinie mit der entsprechenden Wavelet-Basisfunktion verstanden werden.

Als Wavelet-Basisfunktionen werden bekannte Funktionen wie die Mexican-Hat-Funktion verwendet.

Vorteilhaft erfolgt eine Auswahl der Wavelet-Basisfunktion nach der vorgegebenen Bearbeitungsart. Dergestalt wird vorteilhaft die Bearbeitungsart schon bei der Berechnung des Verfahrprofils berücksichtigt.

Aus den Transformationskurven werden durch Anpassung an Maßzahlen und/oder abhängig von der Bearbeitungsart, Modifikationskurven erzeugt. Hierbei wird aus der j-ten Transformationskurve durch einen Modifikationsprozess die j-te Modifikationskurve. Bei dem Modifikationsprozess handelt es sich beispielsweise um eine Glättung der Transformationskurve. Durch die Glättung kann die Genauigkeit der Herstellung eines Werkstücks beeinflusst werden.

Der Modifikationsprozess, insbesondere die Glättung, der Transformationskurven, erfolgt vorteilhaft so, dass durch die Maßzahlen eine maximale Abweichung von einzelnen Punkten in Bezug zu den weiteren Punkten, beispielsweise auf der Modifikationskurve liegend, definiert wird. Punkte, die außerhalb der Abweichungen liegen werden dergestalt verschoben, dass sie wieder im Bereich der zulässigen Abweichungen liegen. Hierbei werden die Abweichungen durch die Maßzahl und/oder die Bearbeitungsart vorgegeben.

Das Verfahrprofil ist die Summe aus den n Modifikationskurven. Das Verfahrprofil kann auch durch eine Summenbildung von gewichtet berücksichtigten Modifikationskurven zusammengesetzt werden. Vorteilhaft können auch einzelne Modifikationskurven nicht bei der Summenbildung berücksichtigt werden.

Das durch die vorstehend erläuterten Verfahrensschritte erzeugte Verfahrprofil wird vorteilhaft abgespeichert und für eine Werkzeugmaschine oder eine Produktionsmaschine bereitgestellt. Das Verfahrprofil ist die Kurve, nach der sich das Werkzeug in der Werkzeugmaschine während der Fertigung des Werkstücks bewegt.

Die Maßzahlen, gemäß denen der Modifikationsprozess ausgerichtet wird, orientieren sich an der geforderten Genauigkeit der Fertigung des Werkstücks. Eine hohe Genauigkeit bei der Fertigung des Bauteils resultiert aus der geringen Modifikation der Transformationskurven, insbesondere der Glättung, beim Modifikationsprozess. Mit anderen Worten ist die Glättung der Transformationskurven zum Erhalt der Modifikationskurven umso stärker, desto ungenauer das Werkstück gefertigt werden soll. Vorteilhaft ist bei einer starken Glättung die Bearbeitungszeit geringer, da das Verfahrprofil in kürzerer Zeit abzuarbeiten ist.

Durch die Erfindung ist es möglich, der Bearbeitungsart entsprechende Verfahrprofile zu berechnen, die nicht mehr aufwendig verändert werden müssen, bevor die Verfahrprofile an die Werkzeugmaschine übermittelt werden können. So kann vorteilhaft das bislang aufwendige Post-Processing vereinfacht werden. Gleichzeitig kann die vorgesehene Bearbeitungsart, wie Laserschneiden oder unterschiedliche CNC-Fertigungsverfahren, direkt bei der Erstellung des Verfahrprofils berücksichtigt werden. Ebenso können geforderte Fertigungsgenauigkeiten bei der Berechnung des Verfahrprofils sichergestellt werden, bevor das Verfahrprofil zur Werkzeugmaschine/Produktionsmaschine oder zu einer Steuereinrichtung der Werkzeugmaschine oder Produktionsmaschine übertragen wird.

Weiter vorteilhafte Ausgestaltungen der Erfindung sind Gegenstand der abhängigen Ansprüche.

In einer vorteilhaften Ausgestaltung des Verfahrens sind die Approximationskurven und/oder die Transformationskurven Wavelet-Basisfunktionen einer Wavelet-Transformation.

Zur Verbindung der Punkte, die durch die Solllinie vorgegeben werden, können Polynome, Exponentialfunktionen oder trigonometrische Funktionen sowie Reihenentwicklungen derselben herangezogen werden. Besonders eignen sich Approximationsfunktionen, die nur mit wenigen Parametern angepasst werden müssen, um die Punkte der Solllinie zu verbinden. Insbesondere für eckenbehaftete Werkstückoberflächen, die mit einer Solllinie dargestellt sind, eignen sich Wavelet-Basisfunktionen sehr gut. Beispielsweise ist eine Verbindung der Punkte unter Anwendung von Kombinationen von Exponentialfunktionen wie einer Gauß-Funktion, multipliziert mit einem Polynom und/oder einer trigonometrischen Funktion, gut geeignet.

Durch die Verwendung von Wavelet-Basisfunktionen sind schnelle und numerisch stabile Berechnungen von Approximationsfunktionen und daraus schließlich eine schnelle und einfache Berechnung eines Verfahrprofils möglich.

In einer weiteren vorteilhaften Ausgestaltung des Verfahrens ist der Modifikationsprozess eine Glättung anhand einer Maßzahl.

Unter einer Maßzahl versteht man Werte, die einer vorgegebenen Genauigkeit bei der Fertigung oder Bearbeitung des Werkstücks proportional sind.

Unter einer Glättung einer Transformationskurve versteht man, dass Punkte, deren Abstand zu einer gemittelten Kurve größer als eine maximale Abweichung ist, zu der gemittelten Kurve hin verschoben werden. Die maximale Abweichung wird aus der Maßzahl und/oder der Bearbeitungsart ermittelt.

Durch die Glättung der Transformationskurven und die damit einhergehende Erstellung von Modifikationskurven werden Fertigungstoleranzen direkt bei der Berechnung des Verfahrprofils berücksichtigt. Die Erstellung fehlerhafter Werkstücke wird so wirksam verhindert und hiermit Kosten bei der Herstellung eingespart.

In einer weiteren vorteilhaften Ausgestaltung des Verfahrens werden die Wavelet-Basisfunktionen anhand der Bearbeitungsart vorgegeben.

Unterschiedliche Wavelet-Basisfunktionen weisen unterschiedliche Eigenschaften in Hinblick auf Stetigkeit oder Träger auf. Beispielsweise kann eine Wahl einer nicht-stetigen Wavelet-Basisfunktion für eine Bearbeitungsart wie dem Laserschneiden günstige Auswirkungen haben.

Sowohl beim Verfahrensschritt C) als auch beim Verfahrensschritt B) können Wavelet-Basis-Funktionen zur Approximation der Punkte von der Solllinie dienen.

Vorteilhaft können für beide Verfahrensschritte B) und C) Wavelet-Basisfunktionen in einer Bibliothek gespeichert sein und bei dem entsprechenden Verfahrensschritt aus dieser Bibliothek ausgewählt und mit den entsprechenden Parametern versehen werden.

In einer weiteren vorteilhaften Ausgestaltung des Verfahrens wird die j-te Approximationskurve durch ein Auslassen jedes i-ten, insbesondere jedes zweiten, Punktes der (j-1)-ten Approximationskurve erzeugt.

Bei der Berechnung der Approximationskurve kann vorteilhaft wie folgt vorgegangen werden: Zur Berechnung der ersten Approximationskurve (j=1) werden die Punkte, welche durch die Solllinie vorgegeben werden, durch eine Approximationsfunktion, insbesondere durch ein Polynom oder eine Spline-Funktion, approximiert. Zur Berechnung einer zweiten Approximationsfunktion (j=2) werden einige Punkte, insbesondere jeder zweite Punkt, aus der Solllinie entfernt. Die verbleibenden Punkte bilden die Grundlage für die zweite Approximationsfunktion (j=2). Die zweite Approximationskurve wird durch Approximation der reduzierten Anzahl der Punkte, insbesondere mit einer Wavelet-Basisfunktion, berechnet.

Zur Berechnung der dritten Approximationskurve (j=3) werden wiederum Punkte aus der Solllinie entfernt. Besonders vorteilhaft wird wiederum jeder zweite Punkt aus der Solllinie entfernt, mit der die zweite Approximationsfunktion approximiert worden ist. Anhand der weiter reduzierten Menge an Punkten wird eine dritte Approximationskurve (j=3) berechnet (approximiert). Weitere Approximationskurven (j=4, 5, 6, ...) werden nach diesem Schema berechnet, indem die Menge der Punkte immer weiter reduziert wird und die reduzierte Menge von Punkten der Ausgang für die Approximationskurve wird.

Durch diese Berechnungsmethode kann dieselbe Approximationskurve, insbesondere eine Wavelet-Basisfunktion, zur Berechnung von n Approximationskurven herangezogen werden. Dies sichert vorteilhaft numerische Stabilität der Berechnung der Approximationskurven und weiter die Berechnung des Verfahrprofils.

In einer weiteren vorteilhaften Ausgestaltung des Verfahrens ergeben sich die Approximationskurven jeweils aus einer Approximation der Punkte durch Polynome, insbesondere B-Splines.

Durch Polynome ist eine besonders einfache numerische Berechnung und Darstellung von Approximationskurven möglich. Durch die Verwendung von Spline-Funktionen, insbesondere durch B-Splines, können überdies eine einfache und schnelle Berechnungsvorschriften zum Einsatz zu kommen.

In einer weiteren vorteilhaften Ausgestaltung des Verfahrens wird die j-te Transformationskurve aus der Differenz der (k+2)-ten Approximationskurve und der (k+1)-ten Approximationskurve gebildet.

Zur Berechnung einer Transformationskurve wird vorteilhaft die Differenz zweier Approximationsfunktionen gebildet. Dabei entspricht die Approximationskurve, die aus der geringsten Anzahl von Punkten hervorgeht, der entsprechenden Transformationskurve.
Durch die Bildung von Differenzen können vorteilhaft numerische Fehler bei der Berechnung der Approximationskurven heraus gerechnet werden.

In einer weiteren vorteilhaften Ausgestaltung des Verfahrens werden die Maßzahlen anhand der Bearbeitungsart vorgegeben.

Die Maßzahlen können durch den Benutzer vorgegeben werden oder als kennzeichnende Größen einer Bearbeitungsart schon bei der Berechnung festgelegt sein. Dann wählt der Benutzer lediglich die Bearbeitungsart und verändert die Maßzahlen nur bei Bedarf.

Dies entlastet den Benutzer der Werkzeugmaschine oder der Produktionsmaschine, so dass dieser lediglich die gewünschte Bearbeitungsart wählt.

In einer vorteilhaften Ausgestaltung der Steuereinrichtung ist das Verfahrprofil zur Ansteuerung von Antrieben in einer Werkzeugmaschine vorgesehen.

Die Steuereinrichtung dient zur Steuerung der Antriebe der Werkzeugmaschine oder der Produktionsmaschine. Die Berechnung des Verfahrprofils für das Werkzeug kann heute ebenfalls in der Steuereinrichtung durchgeführt werden. Somit entfällt eine gegebenenfalls fehleranfällige Übertragung des Verfahrprofils zur Steuereinrichtung.

Die Entwicklung der Solllinie nach Wavelet-Basisfunktionen erfolgt vorteilhaft mit Hilfe der Schnellen-Wavelet-Transformation (Fast-Wavelet-Transformation, FWT). Die Schnelle-Wavelet-Transformation kann ebenso zur Berechnung der Transformationskurven eingesetzt werden.

Zur Berechnung des Verfahrprofils kann auch die Berechnung der Transformationskurven durch eine Wavelet-Transformation, insbesondere durch eine Schnelle-Wavelet-Transformation, erfolgen. Nach einer alternativen Berechnungsmethode erfolgt die Berechnung des Verfahrprofils anhand folgender Vorgehensweise:
Berechnung der Transformationskurven aus einer Wavelet-Transformation der Solllinie mit Wavelet-Basisfunktionen. Die Wahl der Wavelet-Basisfunktionen hängt von der vorgesehenen Bearbeitungsart ab.

Modifikation der Transformationskurven gemäß den oben genannten Ausführungen. Die Modifikation erfolgt insbesondere durch eine Glättung anhand der vorgegebenen Maßzahlen. Durch die Modifikation, insbesondere durch die Glättung, wird jede Transformationskurve in eine Modifikationskurve umgewandelt.

Vorteilhaft kann das Verfahrprofil durch eine Wavelet-(Rück)-Transformation, insbesondere mit Hilfe der Schnellen-Wavelet-Transformation, aus den Modifikationskurven berechnet werden.

Die Erfindung zeichnet sich durch eine besonders effiziente Berechnung eines Verfahrprofils für ein Werkzeug in einer Werkzeugmaschine oder einer Produktionsmaschine aus. Weiter kann eine nachträgliche Anpassung des Verfahrprofils entfallen, da die vorgesehene Bearbeitungsart schon vor der Berechnung des Verfahrprofils durch den Benutzer vorgegeben wird.

Die Erfindung kann neben den genannten Beispielen allgemein zur Berechnung von Verfahrprofilen bei einer Vielzahl von Maschinen eingesetzt werden. Hervorzuheben ist die Einsatzmöglichkeit bei Bewegungsaufgaben für Roboter. Bei der Berechnung eines Verfahrprofils für einen Roboter ist die Solllinie beispielsweise eine Vorgabe aus einer Handlingsaufgabe.

Im Folgenden wird die Erfindung anhand von Figuren beschrieben und erläutert. Dabei zeigen
- FIG 1: eine Steuereinrichtung und eine Werkzeugmaschine,
- FIG 2: ein Verfahren zur Berechnung eines Verfahrprofils,
- FIG 3: ein alternatives Verfahren zur Berechnung eines Verfahrprofils,
- FIG 4: ein Ablaufschema der Berechnung des Verfahrprofils sowie
- FIG 5: zwei Verfahrprofile und eine Solllinie.

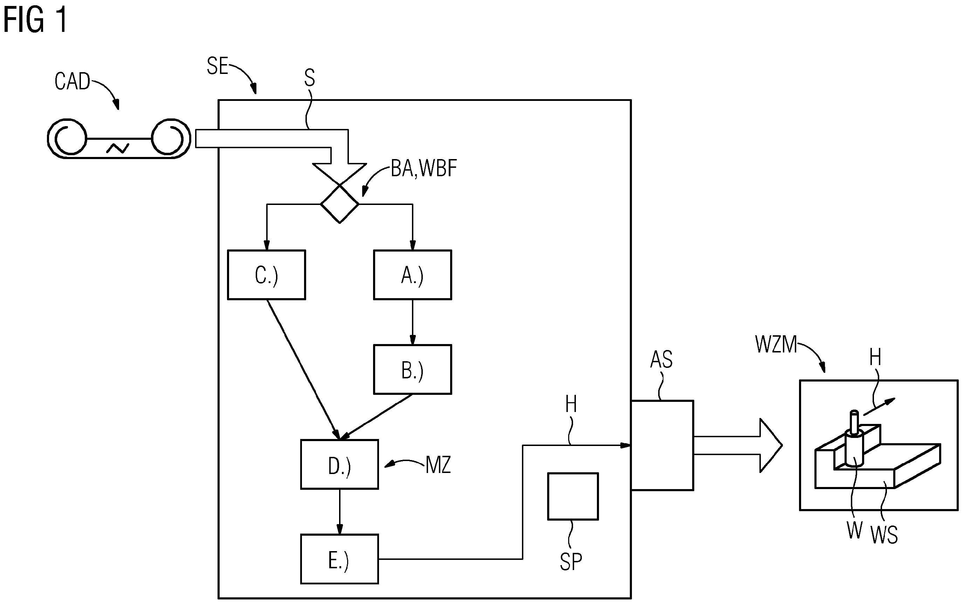

FIG 1 zeigt eine Steuereinrichtung SE und eine Werkzeugmaschine WZM. Die Werkzeugmaschine WZM weist ein Werkzeug W auf, wobei mit Hilfe des Werkzeugs W ein Werkstück WS gefertigt wird. Das Werkzeug W wird entlang eines Verfahrprofils H bewegt. Die Bewegung entlang des Verfahrprofils H des Werkzeugs WZ ist durch einen Pfeil gekennzeichnet. Das Werkzeug W wird durch eine Antriebssteuerung AS in Ihrer Position gesteuert oder geregelt. Die Antriebssteuerung AS wird von der Steuereinrichtung SE angesteuert. Die Antriebssteuerung AS ist entweder Teil der Steuereinrichtung SE oder eine alleinstehende Antriebssteuerung AS, die auch der Werkzeugmaschine WZM zugeordnet sein kann.

Die Steuereinrichtung SE bekommt eine Beschreibung, insbesondere eine CAD-Zeichnung (in der FIG mit CAD bezeichnet) des zu fertigenden Werkstücks WS zugewiesen. Die Beschreibung CAD kann beispielsweise durch ein Teileprogramm, ein NC-Programm oder eine CAD-Datei ausgeführt sein.

Aus der Beschreibung CAD wird eine Solllinie S berechnet. Die Solllinie S wird mit Hilfe des nachfolgend ausgeführten Verfahrens zu dem Verfahrprofil H für das Werkzeug W der Werkzeugmaschine WZM umgewandelt. Das Verfahrprofil wird zur Antriebssteuerung AS übermittelt. Die Antriebssteuerung AS steuert die Antriebe der Werkzeugmaschine WZM. Die Antriebssteuerung AS kann mit Frequenzumrichter, insbesondere Umrichter mit einer Prozessor-Einheit wie ein SINAMICS der Firma Siemens AG, ausgestattet sein.

Die Solllinie S gibt vor, wie das Werkzeug W in einem idealen Fall verfahren werden würde, um das Werkstück WS herzustellen. Durch physikalische Randbedingungen, wie mögliche Ungenauigkeiten oder eine Geschwindigkeitsbegrenzung der Antriebe, wird mit Hilfe der Steuereinrichtung SE das Verfahrprofil H bestimmt, um den Einschränkungen Rechnung zu tragen.

In der Steuereinheit SE wird das Verfahrprofil H aus der Solllinie S, der Bearbeitungsart BA und den Maßzahlen MZ berechnet.

Gemäß der Bearbeitungsart BA erfolgt eine Berechnung des Verfahrprofils H entweder mit Hilfe einer ersten Alternative oder einer zweiten Alternative.

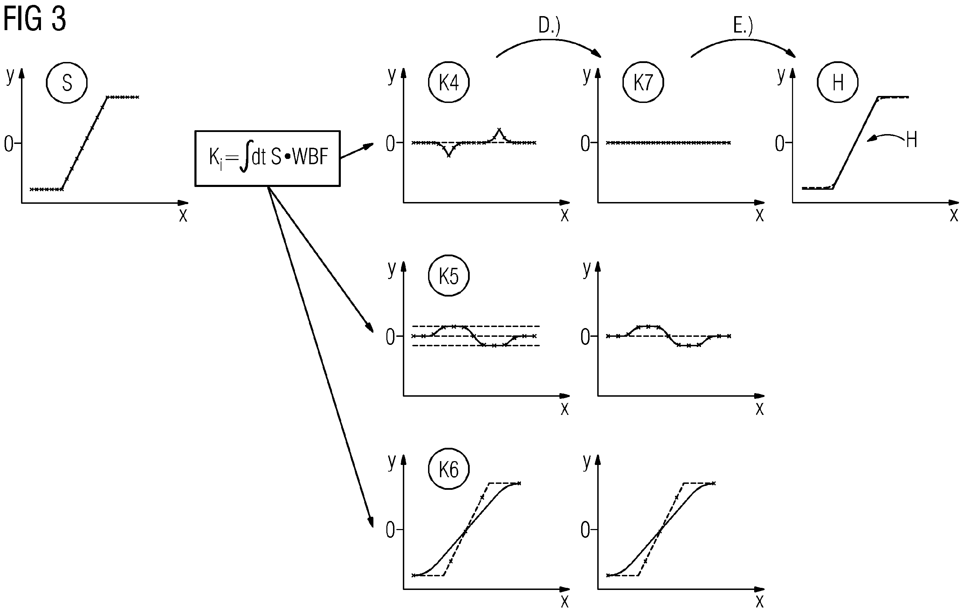

In der ersten Alternative (mit den Verfahrensschritten C), D) und E)) werden aus der Solllinie S mit Hilfe einer Entwicklung der Sollilien S mit Hilfe von Wavelet-Basisfunktionen WBF Transformationskurven K4, K5, K6 (siehe FIG 3) erstellt. Die Transformationskurven K4, K5, K6 werden unter Beachtung der Maßzahlen MZ im Verfahrensschritt D) zu Modifikationskurven K7, K8, K9 modifiziert. Die Modifikationskurven K7, K8, K9 werden in einem letzten Schritt entweder addiert und so zum Verfahrprofil H zusammengesetzt oder mit Hilfe einer Wavelet-Transformation, insbesondere einer Schnellen Wavelet-Transformation, zusammengesetzt.

In einer zweiten Alternative wird die Solllinie S in einer Darstellung von Punkten abgebildet. Aus den Punkten werden die Approximationskurven K1, K2, K3 dergestalt erzeugt, dass die Approximationskurven K1, K2, K3 mit jeweils einer abnehmenden Anzahl an Punkten approximiert werden.

Die Approximationen der Punkte erfolgen mit Hilfe von Wavelet-Basisfunktionen WBF oder mit Spline-Funktionen, insbesondere B-Splines. Die Wavelet-Basisfunktionen WBF ergeben sich aus der vorgesehenen Bearbeitungsart BA. Aus den Approximationsfunktionen K1, K2, K3 werden mit Hilfe der Differenzbildung die Transformationskurven K4, K5, K6 erstellt. Die Transformationskurven K4, K5, K6 werden geglättet und so zu Modifikationskurven K7, K8, K9 modifiziert.

In einem weiteren Schritt werden die Modifikationskurven K7, K8, K9 zu dem Verfahrprofil H addiert. Das Verfahrprofil H ist daher die Summe der Modifikationskurven K7, K8, K9. Die bisher berechneten Verfahrprofile H und/oder die Wavelet-Basisfunktionen WBF sind in einem Speicher SP der Steuereinrichtung SE hinterlegt.

Die Steuereinrichtung SE kann auch durch eine Recheneinheit ausgeführt sein, wobei die Recheneinheit das Verfahrprofil H mit Hilfe eines Interfaces an die Antriebssteuerung AS der Werkzeugmaschine WZM überträgt.

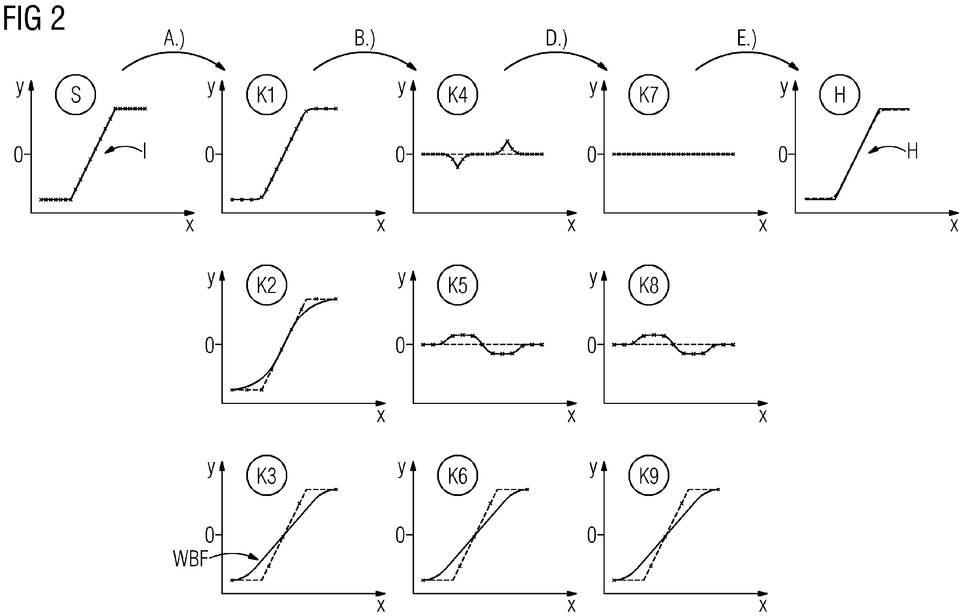

FIG 2 zeigt ein Verfahren zur Berechnung eines Verfahrprofils H. Ausgang der Berechnung ist die Solllinie S, die eine Ecke des Werkstücks WS abbildet. Die Solllinie S wird durch eine Vielzahl von Punkten dargestellt. In einem ersten Schritt A) wird aus den Punkten eine erste Approximationskurve K1 durch Approximation der gesamten Anzahl der Punkte der Solllinie mit einer Approximationsfunktion erzeugt. Als Approximationsfunktion dient vorteilhaft eine Wavelet-Basisfunktion WBF.

Eine zweite Approximationskurve K2 wird erzeugt, indem jeder zweite Punkt der Darstellung der Solllinie S entfernt wird. Die reduzierte Menge der Punkte wird ebenfalls approximiert. Hierzu kann die gleiche oder eine andere Wavelet-Basisfunktion WBF dienen. Eine dritte Approximationskurve K6 wird erzeugt, indem von der reduzierten Menge der Punkte wiederum jeder zweite Punkt entfernt wird. Die weiter reduzierte Menge von Punkten wird, insbesondere mit einer weiteren Wavelet-Basisfunktion WBF, approximiert.

In einem weiteren Verfahrensschritt B) wird eine erste Transformationskurve K4 aus einer Differenz der zweiten Approximationskurve K2 und der ersten Approximationskurve K1 berechnet (K4=K2-K1). Eine zweite Transformationskurve K5 entspricht der Differenz der dritten Approximationskurve K3 und der zweiten Approximationskurve K2 (K5=K3-K2). Die dritte Transformationskurve K6 entspricht der dritten Approximationskurve K3.

In einem weiteren Verfahrensschritt D) werden die Transformationskurven K4, K5, K6 durch eine Modifikation anhand der Maßzahlen MZ zu Modifikationskurven K7, K8, K9.

Die Modifikation erfolgt dergestalt, dass mit Hilfe der Maßzahlen MZ ein Bereich definiert wird, den die Modifikationskurven K7, K8, K9 nicht verlassen dürfen. Ist eine Transformationskurve in einem Bereich größer als der Bereich, so wird diese Kurve in dem Bereich so modifiziert, dass die Transformationskurve K4, K5, K6 in den Bereich zurückfällt. Die Maßzahlen entsprechen insbesondere maximalen Abweichungen.

In dem letzten Schritt E) werden die Modifikationskurven K7, K8, K9 addiert und die Summe der Modifikationskurven K7, K8, K9 bildet das Verfahrprofil H.

FIG 3 zeigt ein alternatives Verfahren zur Berechnung eines Verfahrprofils H. Bei dem hier gezeigten Verfahren erfolgt die Berechnung des Verfahrprofils analog zu dem in FIG 2 gezeigten Verfahren, jedoch werden die Transformationskurven K4, K5, K6 mit Hilfe einer Wavelet-Approximation direkt aus der Solllinie S erzeugt.

Die Solllinie S wird mit Hilfe von Wavelet-Basisfunktionen WBF zu den Transformationskurven K4, K5, K6 transformiert. Als Wavelet-Basisfunktionen WBF dienen vorteilhaft B-Splines. Die Berechnung der ersten Transformationskurve K4 erfolgt demnach durch die Bildung eines Skalarproduktes von der Solllinie S mit der ersten Wavelet-Basisfunktion WBF. Die zweite Transformationskurve K5 entspricht dem Skalarprodukt der Solllinie S mit der zweiten Wavelet-Basisfunktion WBF. Die dritte Transformationskurve K6 entspricht dem Skalarprodukt der Solllinie S mit der dritten Wavelet-Basisfunktion WBF. In der zweiten Transformationskurve K5 ist überdies der Bereich dargestellt, der proportional den Maßzahlen ausgebildet ist. Der Punkt der zweiten Transformationskurve K5, der nicht innerhalb des Bereiches liegt, befindet sich in der zweiten Modifikationskurve K8 wieder in dem Bereich.

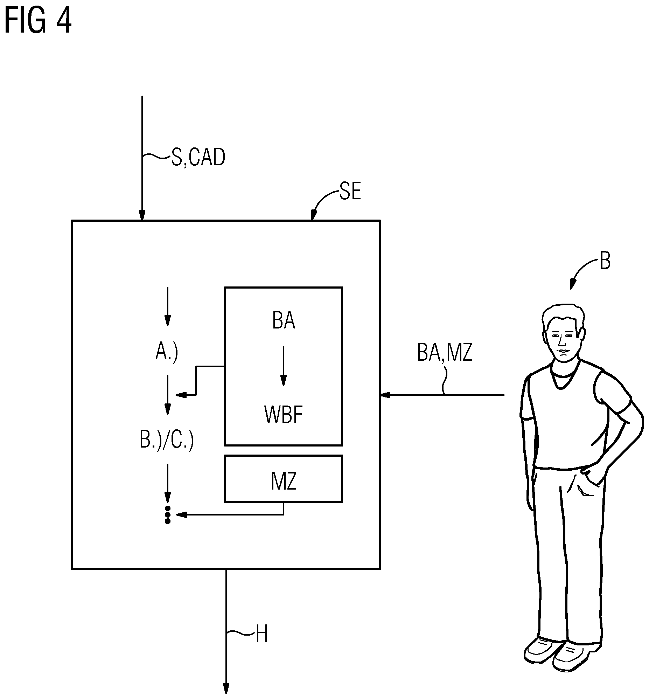

FIG 4 zeigt ein Ablaufschema der Berechnung des Verfahrprofils H. Gezeigt ist ein Benutzer B, der zu einer vorgegebenen Solllinie S oder einer CAD-Datei CAD ein Verfahrprofil H berechnen lässt. Zur Berechnung dient die Steuereinrichtung SE. Der Benutzer B gibt die Bearbeitungsart BA sowie optional Maßzahlen MZ, insbesondere maximale Abweichungen, vor.

Die Steuereinrichtung SE weist der vom Benutzer B vorgegebenen Bearbeitungsart BA geeignete Wavelet-Basisfunktionen WBF zur Berechnung des Verfahrprofils H zu. Die Wavelet-Basisfunktionen WBF werden vorteilhaft für beide hier vorgestellte alternative Berechnungsmethoden bereitgestellt. Weiter wird die Modifikation der Transformationskurven K4, K5, K6 anhand der vorgegebenen Maßzahlen MZ für die Modifikation der Transformationskurven K4, K5, K6 zugeführt. Die Maßzahlen MZ können der Bearbeitungsart BA zugeordnet sein. Die Maßzahlen MZ können jedoch auch von dem Benutzer B vorgegeben oder verändert werden. Die Maßzahlen geben die erlaubten Abweichungen von der Bemaßung des Werkstücks wieder. Die Maßzahlen können jedoch auch die physikalischen Randbedingungen der Werkzeugmaschine WZM bei der Fertigung des Werkstückes WS darstellen.

Als physikalische Randbedingungen kommen maximale Geschwindigkeiten der Antriebe der Werkzeugmaschine WZM, eine Schnittfestigkeit des Materials des Werkstücks WS oder eine vorgegebene Bearbeitungszeit in Betracht.

Als Bearbeitungsart kommen Fräsen (2D und 3D), insbesondere als prismatische Fertigung, Laserbearbeitung, insbesondere Besäumen, Lasern, Laserschneiden, oder Drehen, Schuppen, Schlichten in Betracht.

Durch die Erfindung kann vorteilhaft ein Verfahrprofil berechnet werden, wobei die vorgesehene Bearbeitungsart beachtet wird.

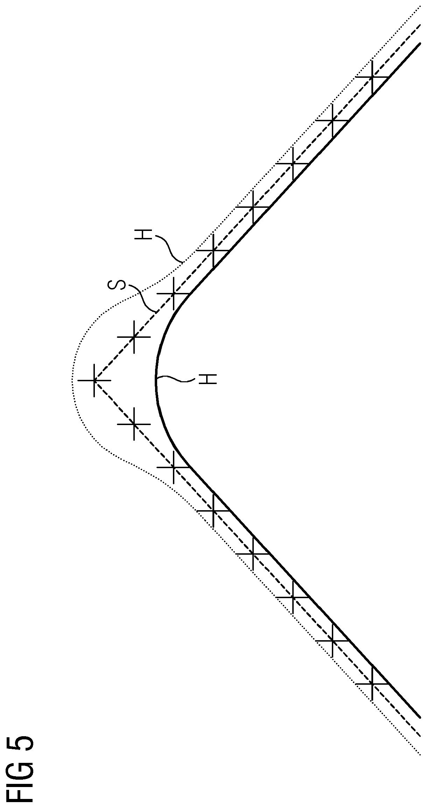

FIG 5 zeigt zwei Verfahrprofile H und eine Solllinie S. Die Solllinie S ist durch eine gestrichelte Linie und durch beabstandet auf der gestrichelten Linie gezeigte Kreuze dargestellt. Die Kreuze symbolisieren die Punkte, anhand derer die Approximationskurven K1, K2, K3 approximiert werden.

Weiter ist ein Verfahrprofil H gezeigt, bei dem das Werkzeug W nicht ganz in die dargestellte Ecke dringt. Dieses Verfahrprofil H kann das Verfahrprofil H einer groben Bearbeitungsart BA mit einer CNC-Maschine darstellen. Das andere Verfahrprofil H geht über die Solllinie S hinaus. Ein solches Verfahrprofil H ist beispielsweise zur Führung eines Werkzeugs W geeignet, dass eine Ecke in einer schnellen Art und Weise herausschneidet. Je genauer die Fertigung, das heißt, je kleiner die maximalen Abweichungen bei der Bearbeitung des Werkstücks W vorgesehen sind, desto geringer ist der Abstand des Verfahrprofils H zur Solllinie S ausgeprägt.

Zusammenfassend betrifft die Erfindung ein Verfahren zur Bereitstellung eines Verfahrprofils H sowie eine Steuereinrichtung SE und eine (Werkzeug-) maschine WZM mit einer solchen Steuereinrichtung SE. Zur Bereitstellung des Verfahrprofils H kann auch ein Computerprogram vorgesehen sein. Zur Bereitstellung eines Verfahrprofils H für ein Werkzeug W wird eine Solllinie S, z.B. aus einer CAD-Zeichnung, erzeugt. Aus der Solllinie S werden mit Hilfe von Wavelet-Basisfunktionen WBF Approximationskurven K1, K2, K3 erstellt. Aus den Approximationskurven K1, K2, K3 werden durch Differenzbildung Transformationskurven K4, K5, K6 gebildet und diese jeweils durch Modifikation an eine gewünschte Genauigkeit der Bearbeitungsart BA angepasst. Durch die Modifikation der Transformationskurven K4, K5, K6 entstehen Modifikationskurven K7, K8, K9. Das Verfahrprofil H ist die Summe der Modifikationskurven K7, K8, K9. Anhand des Verfahrprofils H werden Antriebe der Werkzeugmaschine WZM gesteuert. Besonders vorteilhaft kann die Bereitstellung des Verfahrprofils H anhand der Bearbeitungsart BA, z.B. Grobfräsen, Feinfräsen, Laserschneiden, durch die Wahl von Wavelet-Basisfunktionen WBF optimiert werden.

## Patentansprüche

1. Verfahren (V) zur Bereitstellung eines Verfahrprofils (H), insbesondere das Verfahrprofil (H) eines Werkzeugs (W) in einer Werkzeugmaschine (WZM), wobei eine Solllinie (S) vorgegeben ist, wobei die Solllinie (S) anhand von Punkten entlang einer Kante oder einer Ecke eines Werkstücks definiert ist, wobei zumindest die folgenden Schritte A), B), D) und E) ablaufen:
A) Erstellung von n Approximationskurven (K1, K2, K3), wobei die n Approximationskurven (K1, K2, K3) anhand einer unterschiedlichen Anzahl und/oder Position von Punkten, insbesondere von Punkten aus der Solllinie, durch eine Approximation erstellt werden,
B) Erstellung von n Transformationskurven (K4, K5, K6), wobei die Transformationskurven (K4, K5, K6) jeweils durch eine Differenzbildung aus jeweils zwei der n Approximationskurven (K1, K2, K3) erzeugt werden,
C) Erstellung von n Transformationskurven (K4, K5, K6) durch Wavelet-Approximationen der Solllinie (S) mit Wavelet-Basisfunktionen (WBF),
D) Erstellung von n Modifikationskurven (K7, K8, K9), wobei die j-te (k=l...n) Modifikationskurve (K7, K8, K9) aus der j-ten Transformationskurve (K4, K5, K6) durch einen Modifikationsprozess erzeugt wird,
E) Erstellung des Verfahrprofils (H) durch Addition der n Modifikationskurven (K7, K8, K9).

2. Verfahren nach Anspruch 1, wobei die Approximationskurven (K1, K2, K3) und/oder die Transformationskurven (K4, K5, K6) Wavelet-Basisfunktionen (WBF) einer Wavelet-Transformation sind.

3. Verfahren nach Anspruch 1 oder 2, wobei der Modifikationsprozess durch eine Glättung anhand einer Maßzahl durchgeführt wird.

4. Verfahren nach einem der vorangehenden Ansprüche, wobei die Wavelet-Basisfunktionen anhand der Bearbeitungsart (BA) vorgegeben werden.

5. Verfahren nach einem der vorangehenden Ansprüche, wobei die j-te Approximationskurve (K2, K3) durch ein Auslassen jedes i-ten, insbesondere jedes zweiten, Punktes der (j-1)-ten Approximationskurve (K1, K2) erzeugt wird.

6. Verfahren nach einem der vorangehenden Ansprüche, wobei die sich die Approximationskurven (K1, K2, K3) aus einer Approximation der Punkte durch Polynome, insbesondere B-Splines, ergeben.

7. Verfahren nach einem der vorangehenden Ansprüche, wobei die j-te Transformationskurve (K4, K5, K6) aus der Differenz der (k+2)-ten Approximationskurve (K3) und der (k+1)-ten Approximationskurve (K2) gebildet wird.

8. Verfahren nach einem der vorangehenden Ansprüche, wobei die Maßzahlen anhand der Bearbeitungsart (BA) vorgegeben werden.

9. Steuereinrichtung (SE), insbesondere Steuereinrichtung (SE) einer Werkzeugmaschine (WZM), zur Bereitstellung eines Verfahrprofils (H), wobei als Eingangsgröße eine Solllinie (I), Stützpunkte und/oder ein G-Code-Programm (GCP) vorgegeben sind und ausgebildet, zur Bereitstellung des Verfahrprofils (H) ein Verfahren nach einem der vorangehenden Ansprüche auszuführen.

10. Steuereinrichtung (SE) nach Anspruch 9, wobei das Verfahrprofil (H) zur Ansteuerung von Antrieben in einer Werkzeugmaschine (WZM) vorgesehen ist.

11. Maschine, insbesondere Werkzeugmaschine (WZM), aufweisend eine Steuereinrichtung (SE) nach einem der Ansprüche 9 oder 10.

12. Computerprogramm zur Durchführung eines Verfahrens gemäß einem der Ansprüche 1 bis 8, wobei das Computerprogramm auf einer Steuereinrichtung installiert ist und mit Hilfe der Steuereinrichtung ausgeführt wird.

## Claims

1. Method (V) for providing a travel profile (H), in particular the travel profile (H) of a tool (W) in a machine tool (WZM), wherein a reference line (S) is predetermined, wherein the reference line (S) is defined on the basis of points along an edge or a corner of a workpiece, wherein at least the following steps A), B), D) and E) proceed:
A) Creating n approximation curves (K1, K2, K3), wherein the n approximation curves (K1, K2, K3) are created by means of an approximation on the basis of a different number and/or position of points, in particular of points from the reference line,
B) Creating n transformation curves (K4, K5, K6), wherein the transformation curves (K4, K5, K6) are each generated by differentiation between in each case two of the n approximation curves (K1, K2, K3),
C) Creating n transformation curves (K4, K5, K6) by means of wavelet approximations of the reference line (S) with wavelet base functions (WBF),
D) Creating n modification curves (K7, K8, K9), wherein the j'th (k=1...n) modification curve (K7, K8, K9) is generated from the j'th transformation curve (K4, K5, K6) by means of a modification process,
E) Creating the travel profile (H) by adding the n modification curves (K7, K8, K9).

2. Method according to claim 1, wherein the approximation curves (K1, K2, K3) and/or the transformation curves (K4, K5, K6) are wavelet base functions (WBF) of a wavelet transform.

3. Method according to claim 1 or 2, wherein the modification process is carried out by means of a smoothing on the basis of a reference value.

4. Method according to one of the preceding claims, wherein the wavelet base functions are predetermined on the basis of the processing mode (BA).

5. Method according to one of the preceding claims, wherein the j'th approximation curve (K2, K3) is generated by omitting each i'th, in particular each second, point in the (j-1)'th approximation curve (K1, K2).

6. Method according to one of the preceding claims, wherein the approximation curves (K1, K2, K3) result from an approximation of the points by polynomials, in particular B-splines.

7. Method according to one of the preceding claims, wherein the j'th transformation curve (K4, K5, K6) is formed from the difference between the (k+2)'th approximation curve (K3) and the (k+1)'th approximation curve (K2).

8. Method according to one of the preceding claims, wherein the reference values are predetermined on the basis of the processing mode (BA).

9. Control device (SE), in particular control device (SE) of a machine tool (WZM), for providing a travel profile (H), wherein a reference line (I), support points and/or a G-code program (GCP) are provided as input variables and embodied to carry out a method according to one of the preceding claims in order to provide the travel profile (H).

10. Control device (SE) according to claim 9, wherein the travel profile (H) is provided to control drive elements in a machine tool (WZM).

11. Machine, in particular machine tool (WZM), having a control device (SE) according to one of claims 9 or 10.

12. Computer program for carrying out a method according to one of claims 1 to 8, wherein the computer program is installed on a control device and is executed with the aid of the control device.

## Revendications

1. Procédé (V) de mise à disposition d'un profil (H) de déplacement, notamment du profil (H) de déplacement d'un outil (W) d'une machine-outil (WZM), une ligne (S) de consigne étant prescrite, la ligne (S) de consigne étant définie à l'aide de points sur un bord ou un coin d'une pièce, dans lequel au moins les stades A), B), D) et E) suivants se déroulent :
A) production de n courbes (K1, K2, K3) d'approximation, les n courbes (K1, K2, K3) d'approximation étant produites par une approximation à l'aide d'un nombre et/ou d'une position différent de points, notamment de points de la ligne de consigne,
B) production de n courbes (K4, K5, K6) de transformation, les courbes (K4, K5, K6) de transformation étant produites chacune par une formation de différence à partir de, respectivement, deux des n courbes (K1, K2, K3) d'approximation,
C) production de n courbes (K4, K5, K6) de transformation par des approximations d'ondelette de la ligne (S) de consigne avec des fonctions (WBF) de base d'ondelette,
D) production de n courbes (K7, K8, K9) de modification, la j^{ème} (k=1...n) courbe (K7, K8, K9) de modification étant produite par un processus de modification à partir de la j^{ème} courbe (K4, K5, K6) de transformation,
E) production du profil (H) de déplacement par addition des n courbes (K7, K8, K9) de modification.

2. Procédé suivant la revendication 1, dans lequel les courbes (K1, K2, K3) d'approximation et/ou les courbes (K4, K5, K6) de transformation sont des fonctions (WBF) de base d'ondelette d'une transformation d'ondelette.

3. Procédé suivant la revendication 1 ou 2, dans lequel on effectue le processus de modification par un lissage à l'aide d'une cote.

4. Procédé suivant l'une des revendications précédentes, dans lequel on prescrit les fonctions de base d'ondelette à l'aide du type (BA) d'usinage.

5. Procédé suivant l'une des revendications précédentes, dans lequel on produit la j^{ème} courbe (K2, K3) d'approximation en négligeant un point sur i, notamment un point sur deux, de la (j-1)^{ème} courbe (K1, K2) d'approximation.

6. Procédé suivant l'une des revendications précédentes, dans lequel les courbes (K1, K2, K3) d'approximation proviennent d'une approximation des points par des polynômes, notamment des splines B.

7. Procédé suivant l'une des revendications précédentes, dans lequel on forme la j^{ème} courbe (K4, K5, K6) de transformation à partir de la différence de la (k+2)^{ème} courbe (K3) d'approximation et de la (k+1)^{ème} courbe (K2) d'approximation.

8. Procédé suivant l'une des revendications précédentes, dans lequel on prescrit les cotes à l'aide du type (BA) d'usinage.

9. Dispositif (SE) de commande, notamment dispositif (SE) de commande d'une machine-outil (WZM) pour la mise à dispositif d'un profil (H) de déplacement, une ligne (I) de consigne, des points d'interpolation et/ou un programme de code G (GCP) servant de grandeur d'entrée étant donnés à l'avance et constitués et il est effectué un procédé suivant l'une des revendications précédentes pour la mise à disposition du profil (H) de déplacement.

10. Dispositif (SE) de commande suivant la revendication 9, dans lequel le profil (H) de déplacement est prévu pour commander des entraînements d'une machine-outil (WZM).

11. Machine, notamment machine-outil (WZM), ayant un dispositif (SE) de commande suivant l'une des revendications 9 ou 10.

12. Programme d'ordinateur pour effectuer un procédé suivant l'une des revendications 1 à 8, le programme d'ordinateur étant installé sur un dispositif de commande et étant réalisé à l'aide du dispositif de commande.
